# FASCICULE DE BREVET EUROPEEN

(11) **EP 2 534 430 B1**
(45) Date de publication et mention de la délivrance du brevet: **21.10.2015**
(21) Numéro de dépôt: 11708537.3
(22) Date de dépôt: 08.02.2011
(51) Int. Cl.: F24J 2/16, F24J 2/52, F24J 2/54

(54) **CAPTEUR SOLAIRE À MIROIRS DE FRESNEL**
SONNENKOLLEKTOR MIT FRESNEL-SPIEGELN
SOLAR COLLECTOR HAVING FRESNEL MIRRORS

(30) Priorité: 12.02.2010 FR 1000579
(43) Date de publication de la demande: 19.12.2012
(73) Titulaire: PK-ENR, 69160 Tassin-la-Demi-Lune (FR)
(72) Inventeur: KUZDZAL, Philippe, F-69160 Tassin-la-Demi-Lune (FR)
(74) Mandataire: Verriest, Philippe
(86) Numéro de dépôt international: PCT/FR2011/050255
(87) Numéro de publication internationale: WO 2011/098715

(56) Documents cités:
- WO-A1-2010/099516
- DE-A1- 2 511 740
- DE-U1- 29 518 303
- DE-U1- 29 703 890
- US-A- 3 861 379
- US-A- 3 868 823
- US-A1- 2009 056 699

## Description

La présente invention a pour objet une centrale solaire à miroirs de Fresnel comportant un support pour un ensemble de miroirs constitué par des bandes de miroirs dit miroirs primaires, pivotant chacun autour d'un axe de rotation respectif dit grand axe par rapport au support, et destinés à collecter les rayons du soleil afin de les concentrer en direction d'un ou plusieurs éléments concentrateurs de même nature ou de nature différente.

Une telle centrale solaire à miroirs de Fresnel est décrite dans le document WO 2010/099516 A1.

Un ensemble de miroirs à technologie de Fresnel, ci-après désignés MTF, se compose de miroirs plans longiformes de forme rectangulaire. Ces miroirs longiformes sont assemblés pour former des bandes de miroirs. A titre d'exemple, pour un ensemble de MTF de X mètres de longueur et de 8 mètres de large, les bandes de miroirs plans peuvent avoir une longueur de X mètres et une largeur de 5 à quelques 20 cm ou plus.

Chacune des bandes de miroirs plans est orientable autour de leur axe médian respectif, dit grand axe, généralement horizontal et orienté la plupart du temps selon une direction Est/Ouest pour leur conférer une orientation appropriée pour réfléchir les rayons incidents du soleil en direction d'un élément concentrateur comme un tube concentrateur dans lequel circule un fluide caloporteur.

Le capteur solaire présente généralement un plan de symétrie vertical passant par un axe médian des grands axes des miroirs plans. Ce plan de symétrie sépare virtuellement les MTF en deux parties.

Une centrale solaire à miroirs de Fresnel peut également comprendre un miroir secondaire, par extension des miroirs primaires constitués par les bandes de miroirs plans. Ce miroir secondaire est généralement de forme mono ou bicylindro-parabolique, est situé au dessus du tube concentrateur et a pour fonction de réfléchir en direction du tube concentrateur la partie du rayonnement réfléchi par les MTF qui n'atteint pas directement le tube concentrateur.

Ce miroir secondaire est nécessaire dans les cas où le tube concentrateur présente un diamètre inférieur à la largeur d'une bande de miroir plan primaire. Cependant, l'utilisation d'un miroir secondaire diminue un peu le flux thermique atteignant le tube concentrateur et donc le réchauffement de celui-ci.

Le choix de ne pas installer de miroir secondaire implique :
- de déterminer une largeur des bandes de miroirs plans inférieure au diamètre du tube (ou du tube muni d'ailettes comme on en trouve dans le commerce pour les capteurs thermiques à tube sous vide),
- un asservissement particulièrement précis des bandes de miroirs plans.

Comme l'implantation du tube concentrateur est fixe, il est possible en théorie d'assurer la coordination du mouvement de chacune des bandes de miroirs plans constituant les MTF par rapport à la position du soleil par un unique actionneur relié à chacune des bandes de miroirs plans par exemple par une tringlerie spécifique. Le dispositif de contrôle et de commande dédié au suivi du soleil est donc très simple et peu onéreux.

Il est connu du document US4229076 de disposer l'ensemble des bandes de miroirs plans des MTF sur un support orientable selon un axe vertical afin que l'axe médian des grands axes des miroirs plans suive l'azimut du soleil.

Ainsi, on diminue sensiblement d'une part la longueur de la zone inefficace du tube concentrateur, c'est-à-dire la zone du tube non atteinte et donc non réchauffée par des rayons de soleil réfléchis par les bandes de miroirs plans, et d'autre part la longueur de la zone perdue, c'est-à-dire la zone de l'espace se situant dans le prolongement du tube et qui est traversée par des rayons de soleil réfléchis par les bandes de miroirs plans sans que ceux-ci ne contribuent au réchauffement du tube concentrateur.

Les centrales solaires à miroirs de Fresnel donnent satisfaction pour des basses latitudes inférieure à 30° Nord ou Sud en ce qu'elles permettent de chauffer un fluide caloporteur circulant dans le tube concentrateur à des températures efficaces pour produire de l'eau chaude ou de la vapeur en direct ou via un échangeur thermique. Cette vapeur actionne alors une turbine qui produit de l'électricité.

Cette forme de production d'énergie présente plusieurs avantages dont celui d'utiliser une source d'énergie inépuisable, gratuite et non polluante. De plus, l'utilisation de MTF permet de réaliser à bon marché une surface importante pour collecter des rayons du soleil. En outre, la surface plane des miroirs est relativement facile à nettoyer en comparaison à des surfaces de miroirs courbes.

En effet, les miroirs plans sont moins onéreux à fabriquer et à entretenir que des miroirs paraboliques ou cylindro-paraboliques utilisés pour des applications semblables ; leur installation nécessite une structure relativement légère et leur orientation, autour d'un seul axe, nécessite des moyens assez simples de mise en oeuvre. Il est donc aisé de réaliser et d'entretenir une surface pour collecter des rayons solaires de grande dimension et à moindre coût.

Ces centrales solaires à miroirs de Fresnel présentent également l'avantage de pouvoir être implantées facilement en milieu urbain, par exemple il est possible d'installer des MTF à 50 cm du sol sur les terrasses des bâtiments sans incommodations particulières dues à leur visibilité ou bien à leur risque d'envol sous l'action du vent, ce risque étant plus significatif pour les miroirs paraboliques ou cylindro-paraboliques pouvant générer des gradients de pression entre leur face avant et arrière dus à leur courbure.

Les MTF sont installés sur des structures fixes, leurs grands axes étant orientés la plupart du temps selon un axe Est/Ouest leur permettant de collecter un maximum de rayonnement au cours du déplacement relatif du soleil dans le ciel.

Cependant, le soleil ne se levant pas rigoureusement à l'Est et ne se couchant pas rigoureusement à l'Ouest et pour des hauteurs du soleil relativement basses sur l'horizon, c'est-à-dire principalement proche des positions de levé et de coucher du soleil, et pour une des deux parties des MTF précédemment défini, l'extrémité d'une première bande de miroirs plans disposée en premier par rapport au soleil et orientée en rotation autour de son grand axe pour réfléchir le rayonnement de celui-ci, occulte une partie d'une seconde bande de miroirs plans adjacente à la première et plus éloignée du soleil en créant sur celle-ci une zone d'ombre.

Cette occultation des rayons incidents est maximale deux fois au cours de la journée : une le matin et une le soir, la zone d'ombre sur une bande de miroir étant située tantôt sur un bord tantôt sur l'autre bord pour ces deux périodes de la journée.

La surface occupée par la zone d'ombre sur la seconde bande de miroir n'est pas active car elle ne contribue pas au réchauffement du tube concentrateur.

De même, pour les mêmes hauteurs relativement basses du soleil, et pour la seconde partie des MTF précédemment définie, les rayons réfléchis sur une extrémité d'une première bande de miroirs plans orientée pour réfléchir les rayons incidents provenant du soleil sur le tube concentrateur peuvent être occultés par une extrémité d'une seconde bande de miroirs plans adjacente elle aussi orientée pour réfléchir des rayons incidents du soleil sur le tube concentrateur, en créant une zone perdue sur la première bande de miroirs.

Cette occultation des rayons réfléchis est maximale deux fois au cours de la journée : une le matin et une le soir, la zone perdue sur une bande de miroir étant située tantôt sur un bord tantôt sur l'autre bord pour ces deux périodes de la journée.

La surface occupée par la zone perdue sur la première bande de miroir n'est elle aussi pas active car elle ne contribue pas au réchauffement du tube concentrateur.

La présence de ces surfaces réduit la quantité de rayons réfléchis contribuant au réchauffement du tube concentrateur. L'aire de ces surfaces dépend de :
- la largeur des bandes de miroirs,
- l'espace entre les bandes de miroirs pour leur permettre un jeu de fonctionnement suffisant,
- l'angle d'incidence du rayon incident et donc de la hauteur du soleil,
- la position du tube concentrateur, en particulier sa distance avec les bandes de miroirs.

Cependant, le principal inconvénient des centrales solaires à miroirs de Fresnel tels qu'ils sont décrits dans l'état de la technique réside dans le fait qu'elles nécessitent d'être installées dans des lieux de latitude relativement basse pour avoir des rendements satisfaisants.

La première raison de cette nécessité est factuelle : dans ces régions de basse latitude, c'est-à-dire proche de l'équateur, l'ensoleillement moyen annuel est plus élevé que dans des régions de moyenne latitude, comme par exemple en France, et de haute latitude.

La seconde raison, plus technique, est liée au fait que les rayons solaires sous ces latitudes sont relativement bas. Ainsi pour un lieu situé par 45° Nord, la hauteur du soleil à midi en hiver sera d'environ 23°, et en été d'environ 68°.

Dans ces conditions, la centrale solaire à miroirs de Fresnel fonctionne avec des angles d'incidences réduisant les performances de la centrale.

On observe que les rayons du soleil frappant les bandes de miroirs plans avec un angle d'incidence de 23°, génèrent des rayons réfléchis dans le sens longitudinal du tube atteignant le tube concentrateur très loin de leur point d'origine situé sur les bandes de miroirs plan, générant sur le tube concentrateur une zone inefficace dans laquelle ce type de rayons réfléchis ne contribue pas au flux thermique.

De la même façon, une partie des rayons réfléchis n'atteignent pas le tube concentrateur, génèrent une zone perdue dans laquelle ce type de rayons réfléchis ne contribue pas au flux thermique.

Ces deux absences de contribution réduisent la production thermique potentielle du capteur solaire destiné à chauffer le liquide caloporteur se trouvant à l'intérieur du tube concentrateur.

Comme vu précédemment pour le document US4229076, cet inconvénient pourrait être remédié en partie par l'installation des MTF sur un support pivotant autour d'un axe vertical.

Cependant, cette mise en oeuvre nécessite de disposer d'une surface libre correspondant à une portion de disque de diamètre égal à la longueur des bandes de miroirs pour permettre le pivotement des MTF selon un axe vertical.

L'analyse économique montre que cette solution n'est pas compatible avec les surfaces foncières mises à disposition sur les toitures ou terrasses d'immeubles.

D'autre part, l'efficacité de tels capteurs solaires est directement liée au fait que le disque solaire est visible ou non. De tels capteurs ne sont pas efficaces lorsque le disque du soleil n'est pas visible, par exemple par temps nuageux, ce qui arrive fréquemment dans des zones de moyennes latitudes.

Or, la puissance solaire se caractérise par le rayonnement direct du disque visible et le rayonnement diffus de direction aléatoire.

Pour une période annuelle, à des endroits géographiques donnés, le rapport de puissance entre le rayonnement direct et le rayonnement diffus peut se rapprocher de 1.

Dans ces cas la puissance annuelle en rayonnement direct est du même ordre que la puissance annuelle du rayonnement diffus par unité de surface horizontale.

Il convient donc également de mettre à profit le rayonnement diffus dans un capteur solaire.

Enfin, il convient de na pas limiter l'utilisation d'un tel capteur solaire à la seule production de chaleur.

La présente invention a pour but de résoudre tout ou partie des inconvénients mentionnés ci-dessus.

De tout ce qui précède, la quantité de rayons réfléchis atteignant un des éléments concentrateurs a un optimum pour chaque position du soleil selon la hauteur et l'azimut, c'est-à-dire la projection horizontale de sa direction par rapport au nord géographique. Cette performance de la centrale solaire à miroirs de Fresnel dépend donc des paramètres suivants :
- direction du grand axe des MTF, correspondant à la direction principale prise par chacune des bandes de miroirs longiformes,
- position du lieu géographique, et
- implantation du tube concentrateur par rapport au tablier des MTF.

La variation de la direction du grand axe de chacun des MTF conduit à une solution décrite dans le document US4229076, solution non compatible en milieu urbain.

La position du lieu géographique influence donc considérablement sur les performances d'une centrale solaire, les régions de moyennes et de hautes latitudes n'étant pas des positions géographiques préférentielles.

L'implantation du ou des éléments concentrateurs apparait comme devant rester fixe par rapport au tablier supportant les MTF, celui-ci transportant un liquide caloporteur.

La présente invention va à l'encontre de ce préjugé technique et propose une centrale solaire à miroirs de Fresnel comportant un support pour un ensemble de miroirs constitué par des bandes de miroirs dit miroirs primaires, pivotant chacun autour d'un axe de rotation respectif dit grand axe par rapport au support, et destinés à collecter les rayons du soleil afin de les concentrer en direction d'un ou plusieurs éléments concentrateurs de même nature ou de nature différente caractérisé en ce que ladite centrale solaire comporte des moyens de déplacement de l'un ou plusieurs éléments concentrateurs afin de le rendre mobile par rapport au support de l'ensemble des miroirs primaires.

Cette disposition permet de disposer d'un capteur solaire à miroirs de Fresnel ayant une efficacité satisfaisante sous toutes latitudes, par toutes saisons sans nécessité de disposer de plus de surface que celle occupée par l'ensemble des miroirs primaires. Ainsi, leur installation est envisageable notamment en zone urbaine sur les toitures ou terrasses d'immeubles.

Selon un mode de réalisation, un ou plusieurs éléments concentrateurs est ou sont un tube concentrateur parcouru par un fluide caloporteur.

Cette disposition permet une exploitation du capteur solaire permettant de chauffer le fluide caloporteur.

Selon un mode de réalisation, un ou plusieurs éléments concentrateurs est ou sont un module photovoltaïque.

Cette disposition permet une exploitation du capteur solaire permettant de produire de l'électricité.

Selon un mode de réalisation, les moyens de déplacement comprennent des moyens de déplacements longitudinaux permettant un déplacement du ou des éléments concentrateurs dans un plan horizontal et selon une direction sensiblement longitudinale à la direction des grands axes des miroirs primaires.

Cette disposition permet aux rayons réfléchis longitudinaux d'atteindre la précédente dite zone inefficace du ou des éléments concentrateurs, et de récupérer le flux thermique et/ou lumineux généré par les rayons réfléchis longitudinaux passant précédemment dans ladite zone perdue, ce qui augmente l'efficacité du capteur solaire.

Selon un mode de réalisation, les moyens de déplacement comprennent des moyens de déplacements transversaux permettant un déplacement du ou des éléments concentrateurs dans un plan vertical et selon une direction sensiblement transversale à la direction des grands axes des miroirs primaires.

Cette disposition permet de diminuer l'inclinaison des miroirs primaires sur leur grand axe, ce qui réduit la surface des zones d'ombre et de zone perdue sur les miroirs primaires, ce qui augmente l'efficacité du capteur solaire.

Selon un mode de réalisation, les moyens de déplacement comprennent des moyens de déplacements latéraux permettant un déplacement du ou des éléments concentrateurs dans un plan horizontal et selon une direction latérale sensiblement transversale à la direction des grands axes des miroirs primaires.

Cette disposition permet de diminuer l'inclinaison des miroirs primaires sur leur grand axe, ce qui réduit la surface des zones d'ombre et de zone perdue sur les miroirs primaires, ce qui augmente l'efficacité du capteur solaire.

Selon un mode de réalisation, la centrale solaire comporte des moyens d'actionnement pour déplacer en rotation les miroirs primaires autour de leur grand axe en fonction de la hauteur du soleil et dans laquelle le déplacement du ou des éléments concentrateurs engendré par les moyens de déplacement est fonction du mouvement des miroirs primaires.

Selon un mode de réalisation, la centrale solaire comporte un miroir secondaire destiné à réfléchir en direction du ou des éléments concentrateurs une partie du rayonnement réfléchi par les miroirs primaires qui n'atteint pas directement le ou les éléments concentrateurs et dans laquelle le miroir secondaire suit les mouvements du ou des éléments concentrateurs et est mobile en rotation autour de l'axe principal du ou des éléments concentrateurs.

Selon le même mode de réalisation, le miroir secondaire possède un angle d'ouverture dont la bissectrice s'oriente en rotation autour du tube concentrateur pour coïncider avec la bissectrice de l'angle formé par l'intersection des deux rayons réfléchis extrêmes renvoyés par l'ensemble des miroirs primaires.

Selon un mode de réalisation, la centrale solaire comporte un dispositif de mise au repos du positionnement des miroirs primaires en cas de grand vent.

Selon un mode de réalisation, la centrale solaire comporte un dispositif de mise au repos du positionnement des miroirs primaires, autonome et à sécurité positive en cas de manque de courant.

Selon un mode de réalisation, la centrale solaire comporte un dispositif de mise en position de maintenance des miroirs primaires et/ou du ou des éléments concentrateurs.

Selon un mode de réalisation, la centrale solaire comporte un dispositif de fonctionnement manuel permettant à un opérateur d'orienter à sa convenance les miroirs primaires ainsi que de positionner le ou les éléments concentrateurs.

Selon un mode de réalisation, la centrale solaire comporte un dispositif de nettoyage automatisé des miroirs primaires.

Selon un mode de réalisation, la centrale solaire comporte au moins un capteur thermique agencé pour absorber du rayonnement diffus.

Cette disposition permet de récupérer des calories issues du rayonnement solaire diffus du soleil.

Selon un mode de réalisation, le capteur thermique comporte un échangeur thermique en communication avec le fluide caloporteur circulant dans le ou les tubes concentrateurs.

Cette disposition permet d'apporter des calories supplémentaires au fluide caloporteur circulant dans le ou les tubes concentrateurs.

Selon un mode de réalisation, l'au moins un capteur thermique est mobile en rotation autour d'un axe sensiblement de même direction que le grand axe de chacun des miroirs primaires.

Cette disposition permet de présenter toujours une surface optimale thermiquement calculée selon la hauteur et l'azimut du soleil.

Selon un mode de réalisation, les miroirs primaires comportent une face arrière comprenant des modules photovoltaïques, le mouvement de pivotement de chacun des miroirs primaires autour de leur grand axe respectif par rapport au support autorisant à une face arrière de prendre la place d'une face avant et inversement.

Cette disposition permet de passer d'un mode de fonctionnement privilégiant le chauffage d'un fluide caloporteur à un mode de fonctionnement exclusivement consacré à la production d'électricité.

De toute façon, l'invention sera bien comprise à l'aide de la description qui suit, en référence au dessin schématique annexé représentant, à titre d'exemple non limitatif, une ou plusieurs formes d'exécution de ce capteur solaire.
La figure 1 illustre le fonctionnement d'un capteur solaire à miroirs de Fresnel selon l'état de la technique.
La figure 2 illustre l'ombre portée d'un miroir primaire sur les rayons incidents entre deux bandes adjacentes de miroirs primaires d'une première partie d'un ensemble de miroirs à technologie de Fresnel.
La figure 3 illustre l'occultation des rayons réfléchis par un miroir primaire entre deux bandes adjacentes de miroirs primaires d'une seconde partie d'un ensemble de miroirs à technologie de Fresnel.
La figure 4 illustre la nécessité d'utiliser un miroir secondaire dans un capteur solaire.
La figure 5 illustre la trajectoire des rayons réfléchis longitudinaux pour un capteur solaire installé sous de moyennes ou hautes latitudes.
La figure 6 montre un exemple de moyens de déplacement transversaux permettant un déplacement du tube concentrateur dans un plan vertical et selon une direction sensiblement transversale à la direction des grands axes des miroirs primaires dans un capteur solaire selon l'invention.
La figure 7 montre le détail d'une partie des moyens de déplacement transversaux de la figure 6.
La figure 8 montre un exemple de moyens de déplacement latéraux permettant un déplacement du tube concentrateur dans un plan horizontal et selon une direction latérale sensiblement transversale à la direction des grands axes des miroirs primaires dans un capteur solaire selon l'invention.
La figure 9 montre un exemple de moyens de déplacement longitudinaux permettant un déplacement du tube concentrateur dans un plan horizontal et selon une direction sensiblement longitudinale à la direction des grands axes des miroirs primaires dans un capteur solaire selon l'invention.
La figure 10 illustre un exemple de moyens de déplacement permettant un déplacement du tube concentrateur en hauteur et latéralement aux grands axes des miroirs primaires dans un capteur solaire selon l'invention.
La figure 11 montre une autre solution de positionnement du tube concentrateur avec des moyens de déplacement permettant un déplacement du concentrateur longitudinalement aux grands axes des miroirs primaires dans un capteur solaire selon l'invention.
La figure 12 illustre le positionnement du tube concentrateur et de son miroir secondaire dans un capteur solaire selon l'invention.
La figure 13 illustre un premier positionnement des différents miroirs primaires et des capteurs thermiques d'un capteur solaire à miroirs de Fresnel pour une première direction du rayonnement direct du soleil selon un autre aspect de l'invention.
La figure 14 illustre un deuxième positionnement des différents miroirs primaires et des capteurs thermiques du capteur solaire de la figure 13 pour une deuxième direction du rayonnement direct du soleil.
La figure 15 illustre un troisième positionnement des différents miroirs primaires et des capteurs thermiques du capteur solaire des figures 13 à 14 pour une troisième direction du rayonnement direct du soleil.
La figure 16 illustre l'interaction mécanique entre deux capteurs thermiques du capteur solaire dans son premier positionnement illustré à la figure 13.
La figure 17 illustre l'interaction mécanique entre deux capteurs thermiques du capteur solaire dans son deuxième positionnement illustré à la figure 14.
La figure 18 illustre l'interaction mécanique entre deux capteurs thermiques du capteur solaire dans son troisième positionnement illustré à la figure 15.
La figure 19 illustre une vue d'ensemble d'un mode de réalisation d'un capteur solaire combinant à la fois une exploitation du rayonnement thermique et une exploitation du rayonnement lumineux.
La figure 20 illustre une vue partiel du capteur solaire illustré à la figure 19.

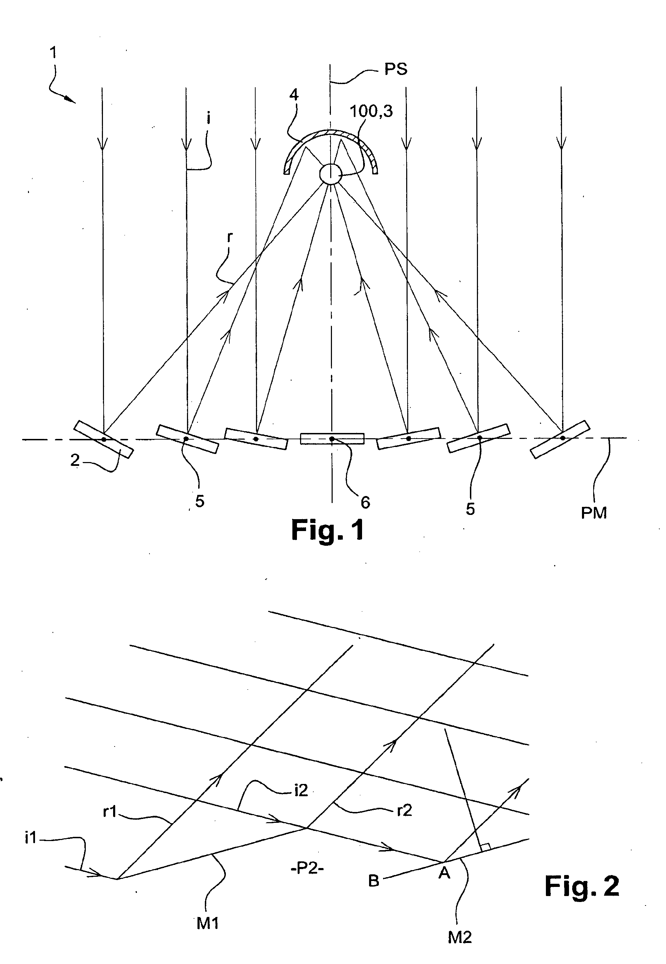

Comme illustré à la figure 1, un capteur solaire à miroirs de Fresnel 1 comporte un ensemble de miroirs de Fresnel dit miroirs primaires 2 aptes à collecter des rayons incidents i provenant du soleil pour les faire converger sous forme de rayons réfléchis r en direction d'un élément concentrateur 100 constitué par un tube concentrateur 3.

Les rayons réfléchis r n'atteignant pas directement le tube concentrateur 3 sont renvoyés sur celui-ci à l'aide d'un miroir secondaire 4 de forme cylindro-parabolique.

Le flux thermique généré par la concentration des rayons réfléchis r, chauffe le tube concentrateur 3 ainsi que le fluide caloporteur qu'il véhicule.

Tous les miroirs primaires 2 sont plans, longiformes et sont chacun orientables en rotation autour de leur grand axe 5 respectif. Cette orientation varie en fonction de la position du soleil dans le ciel définie par sa hauteur et son azimut.

L'orientation des miroirs primaires est symétrique autour d'un plan vertical PS passant par un axe médian 6 à l'ensemble des grands axes 5 des miroirs primaires 2, ce plan PS sépare l'ensemble des miroirs primaires 2 en deux parties symétriques P1 et P2.

Dans un capteur solaire 1 selon l'état de la technique, le tube concentrateur 3 ainsi que le miroir secondaire 4 sont tous deux maintenus fixes par rapport aux miroirs primaires 2.

Comme illustré à la figure 2, dans un tel capteur solaire 1, pour des hauteurs du soleil relativement basses et des miroirs M1 et M2 se trouvant dans la partie P2 du capteur solaire, l'extrémité du premier miroir M1 fait de l'ombre sur l'extrémité du second miroir M2 entre la portion AB en occultant une partie des rayons incidents i.

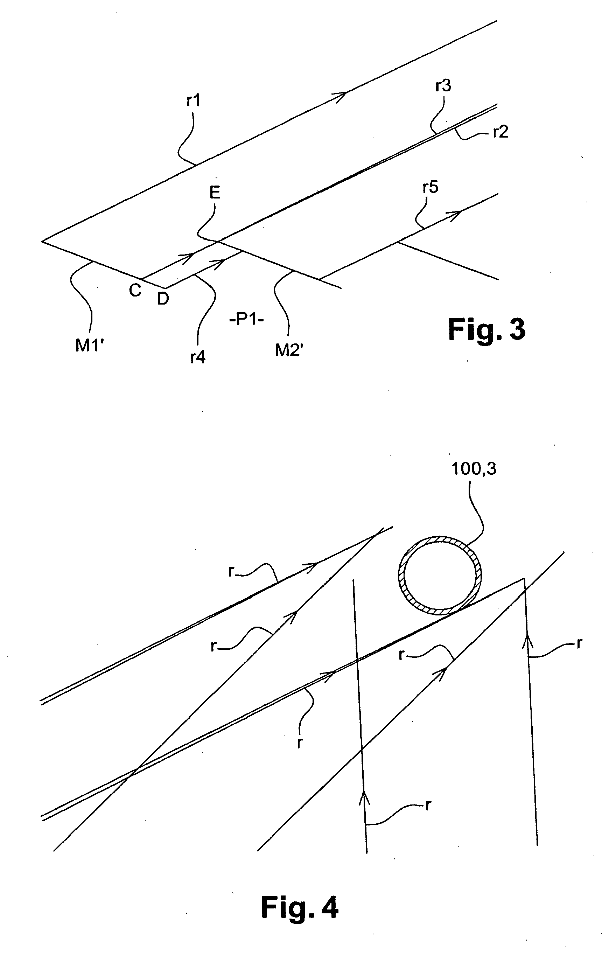

Comme illustré à la figure 3, dans un tel capteur solaire 1, pour des hauteurs du soleil elles aussi relativement basses mais pour des miroirs M1' et M2' se trouvant dans la partie P1 du capteur solaire, le miroir M1' est totalement atteint par des rayons incidents i mais les rayons réfléchis r issus des rayons incidents i frappant la portion CD sont stoppés par la face arrière du miroir M2'.

Dans les deux exemples précédents la partie P1 est plus proche du soleil que la partie P2 pour une même hauteur relativement basse du soleil.

Ces deux figures 2 et 3 montrent bien la nécessité de devoir réduire les portions AB et CD et donc l'inclinaison des miroirs primaires 2 sur leur grand axe 5.

Pour résoudre ce problème, l'invention propose de rendre le tube concentrateur 3 mobile, en particulier par des moyens de déplacements transversaux 20 et latéraux 30 du tube concentrateur 3.

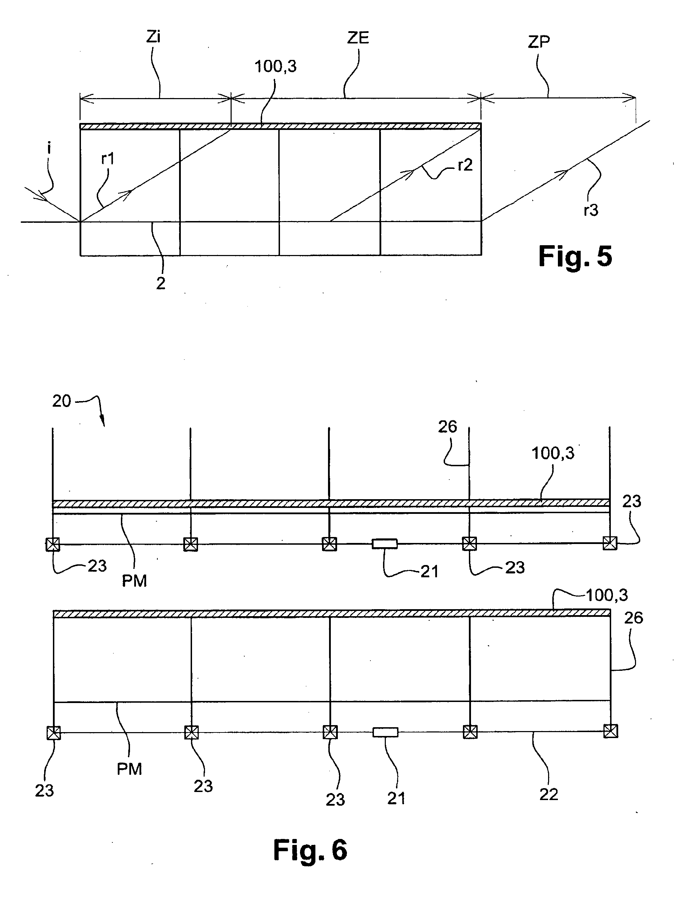

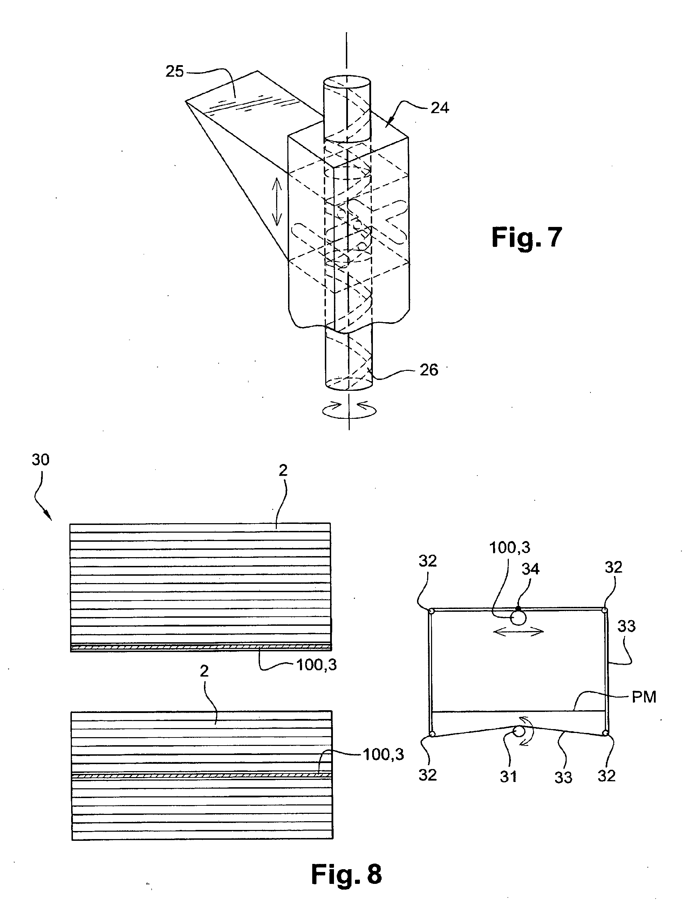

Les figures 6 et 7 illustrent un mode de réalisation de l'invention avec un exemple de réalisation de moyens de déplacements transversaux 20 pouvant être employés.

Dans le mode de réalisation présenté, les moyens de déplacements transversaux 20 comprennent un moteur d'entraînement 21, un arbre d'entraînement 22, un ensemble de vérins mécaniques 23 à vis sans fin 26 avec renvoi à angle droit, une structure porteuse 24 sur vis sans fin 26 et un support de fixation 25 pour le tube concentrateur 3.

La rotation du moteur d'entraînement 21 entraîne en rotation l'arbre d'entraînement 22 qui actionne de façon synchronisée l'ensemble des vérins mécaniques 23 à vis sans fin 26 avec renvoi à angle droit.

Les vérins mécaniques 23 à vis sans fin 26 avec renvoi à angle droit sont répartis uniformément le long du tube concentrateur 3. Leur nombre peut varier en fonction des dimensions du tube concentrateur 3.

Les vis sans fin 26 de ces vérins 23 constituent des poutres autoporteuses pour le tube concentrateur 3.

Suivant le sens de rotation du moteur d'entraînement 21, le mouvement de rotation de la vis sans fin 26 des vérins mécaniques 23 engendre un mouvement de translation vers le haut ou vers le bas de la structure mobile porteuse 24 monté sur les vis sans fin 26.

Le support de fixation 25 est solidaire à la fois de la structure mobile porteuse 24 et du tube concentrateur 3.

Ainsi, suivant le sens de rotation du moteur d'entraînement 21, le tube concentrateur 3 sera entraîné selon un premier sens ou selon un second sens de translation transversale.

Plus le pas de la vis sans fin 26 est fin et plus le mouvement de translation verticale du tube concentrateur 3 est précis.

Ces moyens de déplacement transversaux 20 sont à sécurité positive car le pas des vis sans fin 26 est choisi pour interdire une autoréversabilité du mouvement, par exemple en cas de panne électrique.

Structurellement, les poutres autoporteuses verticales peuvent être haubannées si nécessaire.

D'autres solutions peuvent également être mises en oeuvre par câbles ou filins textiles non extensibles de type kevlar^{®} ou similaire, en utilisant des propriétés universellement connues comme les palans.

La figure 8 illustre un mode de réalisation de l'invention avec un exemple de réalisation de moyens de déplacements latéraux 30 pouvant être employés.

Dans le mode de réalisation présenté, les moyens de déplacements latéraux 30 comprennent un moteur d'entraînement 31, des poulies de renvoi 32, un câble 33 et un point fixe 34.

Dans cet exemple, le moteur d'entraînement 31 est positionné sensiblement à la verticale en dessous du tube concentrateur 3 lorsque celui-ci est en position médiane de sa course.

La rotation du moteur d'entraînement 31 entraîne sensiblement en translation le câble 13 dans un sens dépendant directement du sens de rotation du moteur d'entraînement 31.

Le câble 33 n'est pas extensible et peu par exemple être constitué de filin textile non extensible de type kevlar^{®} ou similaire.

Deux premières poulies de renvoi 32 sont disposées latéralement de part et d'autre du moteur d'entraînement 31 sensiblement sur le même plan horizontal. Ces deux premières poulies de renvoi 32 renvoient le câble 33 sensiblement selon la direction verticale.

Deux autres poulies de renvoi 32 sont disposées de part et d'autre du tube concentrateur 3 et renvoient chacune le câble 33 sur le point fixe 34.

Le point fixe 34 est solidaire du tube concentrateur 3 et le câble 13 vient se fixer sur ce points fixe 34.

Ainsi, suivant le sens de rotation du moteur d'entraînement 31, le tube concentrateur 3 sera entraîné selon un premier sens ou selon un second sens de translation transversale.

La figure 5 illustre la déperdition en chaleur occasionnée par la position du tube concentrateur 3 vis-à-vis de rayons réfléchis r longitudinaux au tube concentrateur 3 pour un capteur solaire 1 installé sous une latitude moyenne.

Sous des latitudes moyennes, l'angle d'incidence des rayons incidents i est faible, par conséquence l'angle de réflexion r est lui aussi faible. Dans ces conditions, une partie du rayonnement réfléchi r n'atteint pas le tube concentrateur 3. La zone non atteinte par les rayons réfléchis est dite zone inefficace ZI du tube concentrateur 3. Une partie du rayonnement réfléchi r n'est pas interceptée par le tube concentrateur 3. La zone transparente aux rayons réfléchis r est dite zone perdue ZP. Ainsi, les rayons réfléchis r longitudinaux ne contribuent au chauffage du tube concentrateur 3 que sur une distance limitée du tube concentrateur 3 dite zone efficace ZE située entre la zone inefficace ZI et la zone perdue ZP.

Cette figure 5 illustre bien la nécessité de déplacer le tube concentrateur 3 longitudinalement aux grands axes 5 des miroirs primaires 2 pour récupérer un maximum de rayons réfléchis r longitudinaux ainsi qu'un maximum d'exposition du tube concentrateur 3 à ces rayons réfléchis r longitudinaux.

Pour répondre à cette attente, l'invention prévoit des moyens de déplacements longitudinaux 10.

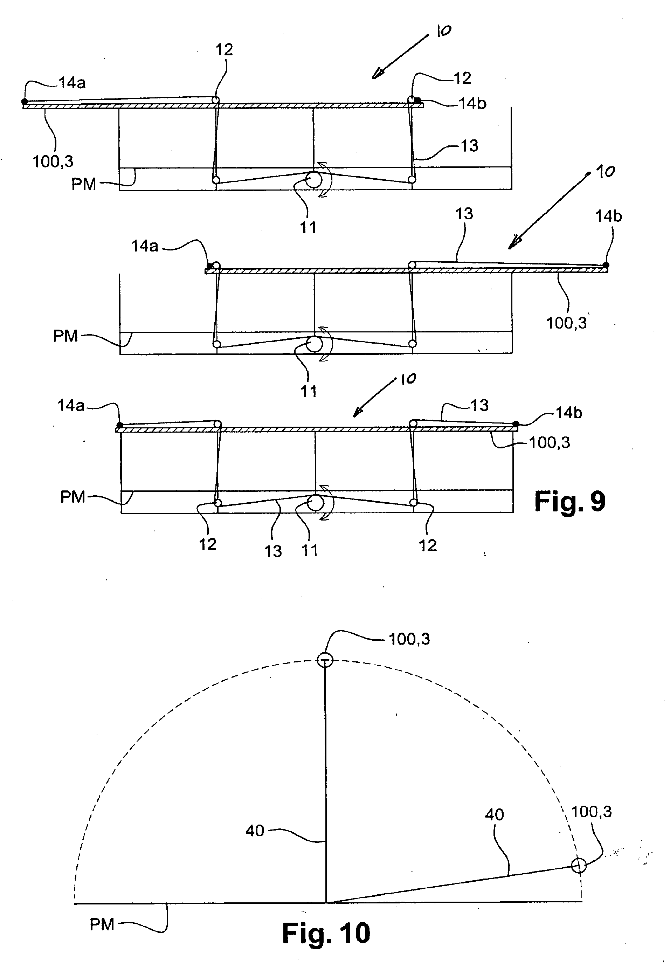

La figure 9 illustre un mode de réalisation de l'invention avec un exemple de réalisation de moyens de déplacements longitudinaux 10 pouvant être employés.

Dans le mode de réalisation présenté, les moyens de déplacements longitudinaux 10 comprennent un moteur d'entraînement 11, des poulies de renvoi 12, un câble 13 et deux points fixes 14a et 14b.

Dans cet exemple, le moteur d'entraînement 11 est positionné sensiblement en position médiane de la course du tube concentrateur 3 et en dessous de celui-ci.

La rotation du moteur d'entraînement 11 entraîne en translation le câble 13 dans un sens dépendant directement du sens de rotation du moteur d'entraînement 11.

Le câble 13 n'est pas extensible et peu par exemple être constitué de filin textile non extensible de type kevlar^{®} ou similaire.

Deux premières poulies de renvoi 12 sont disposées latéralement de part et d'autre du moteur d'entraînement 11 sensiblement sur le même plan horizontal. Ces deux premières poulies de renvoi 12 renvoient le câble 13 sensiblement à la verticale en direction du tube concentrateur 3.

Deux autres poulies de renvoi 12 sont disposées au dessus du tube concentrateur 3 et renvoient chacune une extrémité du câble 13 sur un des deux points fixes 14a et 14b.

Les deux points fixes 14a et 14b sont solidaires du tube concentrateur 3 et chacune des deux extrémités du câble 13 vient se fixer sur un des deux points fixes 14a, 14b.

Ainsi, suivant le sens de rotation du moteur d'entraînement 11, le tube concentrateur 3 sera entraîné selon un premier sens ou selon un second sens de translation longitudinale.

L'ensemble des exemples de réalisation pour réaliser le mouvement vertical, latéral et longitudinal du tube concentrateur 3 peut être combiné de façon bien connue en soi en déportant les points fixes de deux des trois moyens de déplacement précédemment décrit, sur deux platines de support supportant chacune un moyen de déplacement différent.

Pour pouvoir effectuer librement ces déplacements, les extrémités du tube concentrateur 3 sont reliées au reste du circuit véhiculant le fluide caloporteur par des jonctions souples.

La figure 10 propose une solution technique répondant à plusieurs des propriétés décrites précédemment. Celle-ci consiste à fixer le tube concentrateur 3 en extrémité d'un bras oscillant 40 de dimension appropriée.

Le déplacement du bras oscillant 40 peut se faire de façon hydraulique ou par câble (non illustré).

Le mouvement ainsi obtenu permet au tube de se déplacer verticalement en hauteur et latéralement selon une direction transversale aux grands axes 5 des miroirs primaires 2.

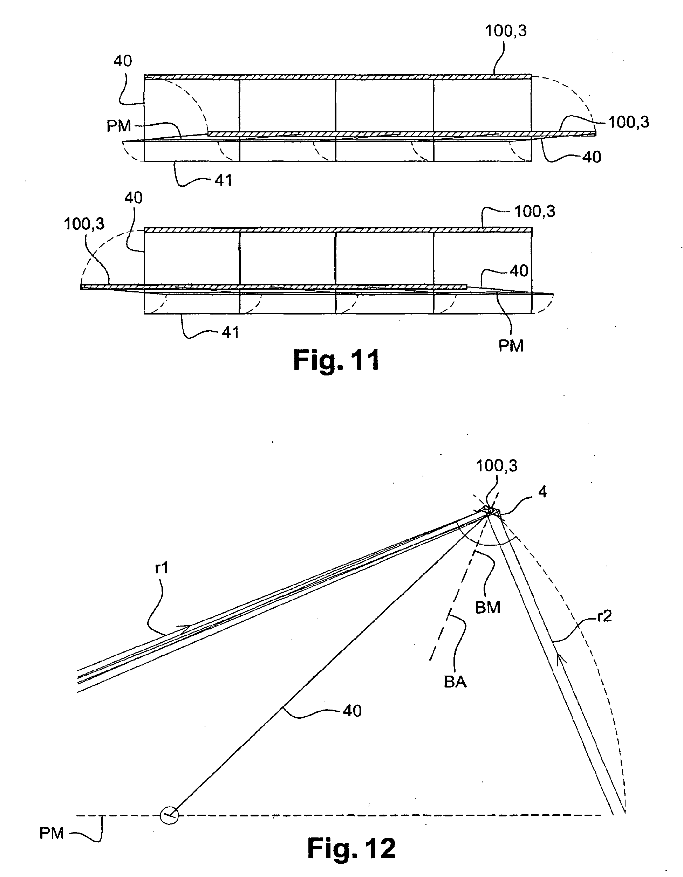

La figure 11 illustre une autre solution de positionnement du tube concentrateur 3 vis-à-vis des miroirs plans 2.

Cette solution consiste à adapter la solution du bras oscillant de tel sorte que le tube concentrateur 3 s'élève et se baisse selon une direction longitudinale aux grands axes 5 des miroirs plans 2.

L'exemple de réalisation montré sur cette figure 11 illustre la position du tube concentrateur le matin (en haut) et en soirée (en bas).

Dans cet exemple de réalisation le tube concentrateur est relié à cinq bras oscillanta d'axe de rotation situé au niveau du plan PM des grands axes 5 des miroirs plans 2. Chacun des cinq bras oscillants 40 est relié sur une de ses deux extrémités au tube concentrateur 3 et sur l'autre ses deux extrémités à un moyen de transmission coordonnant le mouvement de l'ensemble des bras oscillants 40.

Ainsi, le tube concentrateur 3 peut être rapproché du plan comprenant l'ensemble des grands axes 5 des miroirs primaires 2 et également se positionner pour pour récupérer un maximum de rayons réfléchis r longitudinaux ainsi qu'un maximum d'exposition du tube concentrateur 3 à ces rayons réfléchis r longitudinaux.

L'orientation du miroir secondaire 4 dans le sens longitudinal n'est pas nécessaire.

La figure 4 illustre la nécessité de disposer d'un miroir secondaire 4 dans le cas où la largeur des miroirs primaires 2 est plus large que le diamètre du tube concentrateur 3. En effet, dans ces conditions une partie des rayons réfléchis r passe à côté du tube concentrateur 3 sans l'atteindre. On comprend donc bien l'utilité d'un miroir secondaire 4 disposé en arrière du tube concentrateur 3 pour réacheminer ces rayons réfléchis r sur le tube concentrateur 3.

Selon l'invention, ce miroir secondaire 4 suit les mouvements du tube concentrateur 3 et est mobile en rotation autour de l'axe du tube concentrateur 3.

L'orientation prise par le miroir secondaire en fonction de la position du tube concentrateur est illustré à la figure 12 en combinaison avec le mode de réalisation illustré à la figure 10 proposant l'utilisation d'un bras oscillant 40 pour le déplacement vertical et latéral du tube concentrateur 3.

La rotation du miroir secondaire 4 autour du tube concentrateur 3 peut ainsi être assurée par un dispositif de biellettes (non illustré), par exemple, prenant comme référence la position du bras oscillant 40 par rapport au plan comprenant l'ensemble des grands axes 5 des miroirs primaires 2.

Ce dispositif de biellettes oriente le miroir secondaire 4 de manière à ce que la bissectrice BM de son angle d'ouverture soit confondue avec la bissectrice BA de l'angle formé par l'intersection des deux rayons réléchis r extrêmes.

L'utilisation d'une transmission hydraulique (non illustrée) couplé à un distributeur hydraulique (non illustré) positionne le miroir secondaire 4 en agissant sur la course des biellettes. Un système classique de contrôle de la position (non illustré) du tiroir du distributeur est employé pour connaître la position du miroir secondaire 4 à tout moment.

Contrairement aux capteurs solaires 1 de l'état de la technique, le mouvement de rotation des miroirs primaires 2 autour de leur grands axes 5 en fonction de la hauteur du soleil dans un capteur solaire 1 selon l'invention, il est avantageux d'utiliser une fonction non linéaire avec un actionnement individuel de chacun des miroirs primaires 2.

Aussi, il y a deux types de solutions pour gérer la rotation des rangées de miroirs primaires 2 :
- de façon électro-mécanique, ou
- de façon mécanique.

Dans le premier cas de figure, il est avantageux de réaliser autant de lignes d'asservissements électroniques pour commander les actionneurs électro-mécaniques de chacun des groupes de miroirs primaires 2.

Dans le deuxième cas de figure, un asservissement mécanique simple permet la mobilité des miroirs primaires 2 avec un système d'axes/tringleries.

La mobilité du tube concentrateur 3 dans l'objectif d'améliorer significativement l'efficacité du capteur solaire 1 induit la complexité des relations coordonnant le mouvement des miroirs primaires 2 avec le mouvement du tube concentrateur 3 et de son miroir secondaire 4.

Aussi pour faciliter les réglages à effectuer sur les asservissements décrits ci-dessus, ceux-ci sont calculés à partir d'un simulateur numérique.

Ce simulateur numérique permet également d'identifier l'emplacement optimal du tube concentrateur 3 en fonction de la hauteur du soleil, de son azimut, et de la direction du tube qui est parallèle à celle des grands axes 5 des miroirs primaires 2.

Le simulateur numérique permettra entre autre de déterminer les caractéristiques idéales du capteur solaire 1 selon :
- le site d'implantation du capteur solaire 1,
- la priorité d'usage ; c'est-à-dire si l'on favorise une production hivernale pour le chauffage et l'eau chaude ou estivale pour l'eau chaude et la climatisation solaire.

Le simulateur complet intègre également les paramètres solaires et les statistiques météorologiques et de rayonnement du lieu du site à étudier pour l'implantation d'un capteur solaire 1.

Ainsi, ce simulateur combine :
- la performance théorique du capteur solaire 1 dont l'installation est envisagée, celle-ci dépendant de la dimension des miroirs primaires 2, de la dimension de l'espace entre les miroirs primaires 2, de l'implantation du tube concentrateur 3 intégrant sa position par rapport à l'axe médian 6 de l'ensemble des grands axes 5 des miroirs primaires 2 et son élévation par rapport au plan PM comportant l'ensemble des grands axes 5 des miroirs primaires 2, du rendement optique moyen estimé, et de l'orientation de l'axe médian 6 de l'ensemble des grands axes 5 des miroirs primaires 2,
- la course du soleil pour une période d'un an, c'est-à-dire son azimut et sa hauteur par rapport à l'horizon, et
- les données statistiques du rayonnement du site concerné, intégrant la variation de la nébulosité.

Le pas de simulation est d'une heure par site considéré.

Le capteur solaire 1 prévoit également plusieurs dispositifs de sécurité et de maintenance.

Notamment, un dispositif de mise au repos du positionnement des miroirs primaires en cas de grand vent.

Ce dispositif comprend un anémomètre renseignant sur la vitesse du vent et prévoit un seuil de vitesse au-delà duquel le dispositif envoie l'ordre aux actionneurs d'orienter sensiblement le plan de la surface de l'ensemble des miroirs primaires 2 selon la direction verticale et de ramener le tube concentrateur 3 dans une position proche du plan PM comportant l'ensemble des grands axes 5 des miroirs primaires 2.

Cette position des miroirs primaires 2 et du tube concentrateur 3 est également adopté sous l'ordre d'un dispositif de mise au repos autonome et à sécurité positive en cas de manque de courant.

Pour une maintenance préventive, le capteur prévoit également un dispositif de mise en position de maintenance des miroirs primaires et/ou du tube concentrateur permettant à un opérateur d'effectuer aisément les prestations de maintenance du capteur solaire 1 de façon accessible sans nécessité de nacelle ou autre échaffaudage.

Pour une maintenance plus corrective, le capteur solaire prévoit un dispositif de fonctionnement manuel permettant à un opérateur d'orienter à sa convenance les miroirs primaires 2 ainsi que de positionner le tube concentrateur 3.

Pour l'entretien du capteur solaire 1, celui-ci prévoit un dispositif de nettoyage automatisé des miroirs primaires 2 seuls ou avec le miroir secondaire 4. Ce dispositif, comprenant par exemple une brosse rotative, peut fonctionner même dans le cas de la position de maintenance ou de sécurité du capteur solaire 1.

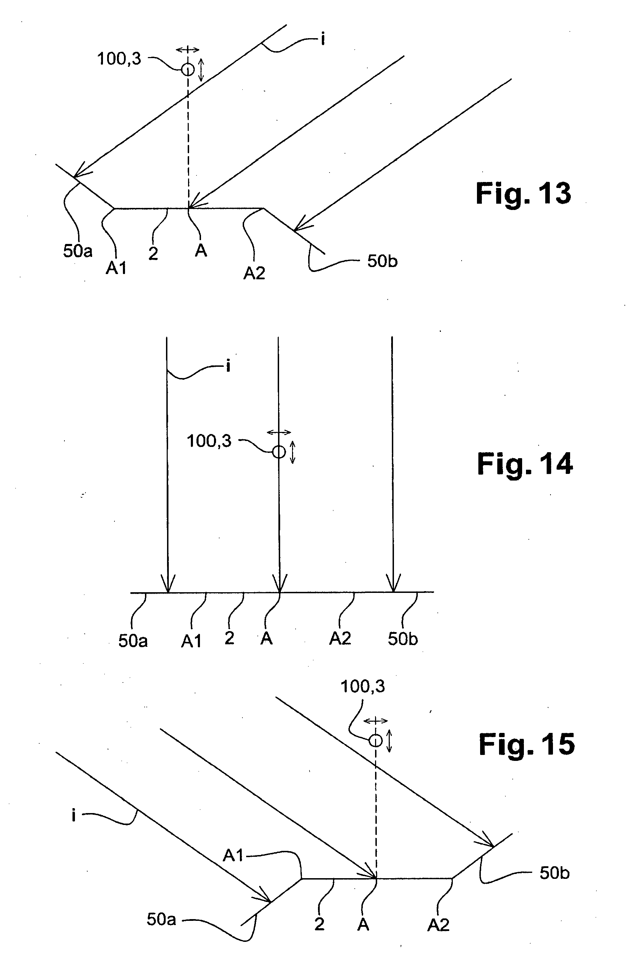

Selon un mode de réalisation illustré aux figures 13 à 18, le capteur solaire 1 comprend un premier capteur thermique 50a et un deuxième capteur thermique 50b disposés à proximité immédiate de l'ensemble des miroirs plans 2.

Le premier capteur thermique 50a et le deuxième capteur thermique 50b sont mobiles en rotation respectivement autour d'un axe A1 et autour d'un axe A2.

Comme illustré sur l'ensemble des figures 13 à 18, les axes de rotation A1, A2 sont disposés selon une même direction que la direction des grands axes A des miroirs plans 2.

De plus, ces axes A1, A2 sont disposés de préférence au niveau des bords latéraux extérieurs des deux miroirs plans extrêmes de manière à ne pas créer de zone d'ombre sur les miroirs plans 2 pour les diverses positions prises par le soleil dans le ciel au cours de la journée.

Ainsi, la position des capteurs thermiques 50a, 50b est illustrée à la figure 13 pour une position correspondant au matin, à la figure 14 pour une position correspondant à midi, et à la figure 15 pour une position correspondant au soir.

Chacun de ces deux capteurs thermiques 50a, 50b comprend une surface absorbant le rayonnement solaire, de préférence de couleur noire, ainsi qu'un échangeur thermique (non illustré).

Cet échangeur thermique comprend un circuit primaire chauffé par le rayonnement solaire direct provenant du soleil lorsque celui-ci est apparent mais également par le rayonnement diffus présent tout au long de la journée.

Ce circuit primaire chauffe un circuit secondaire dans lequel circule le même fluide caloporteur que celui circulant dans le tube concentrateur 3 accentuant ainsi son chauffage.

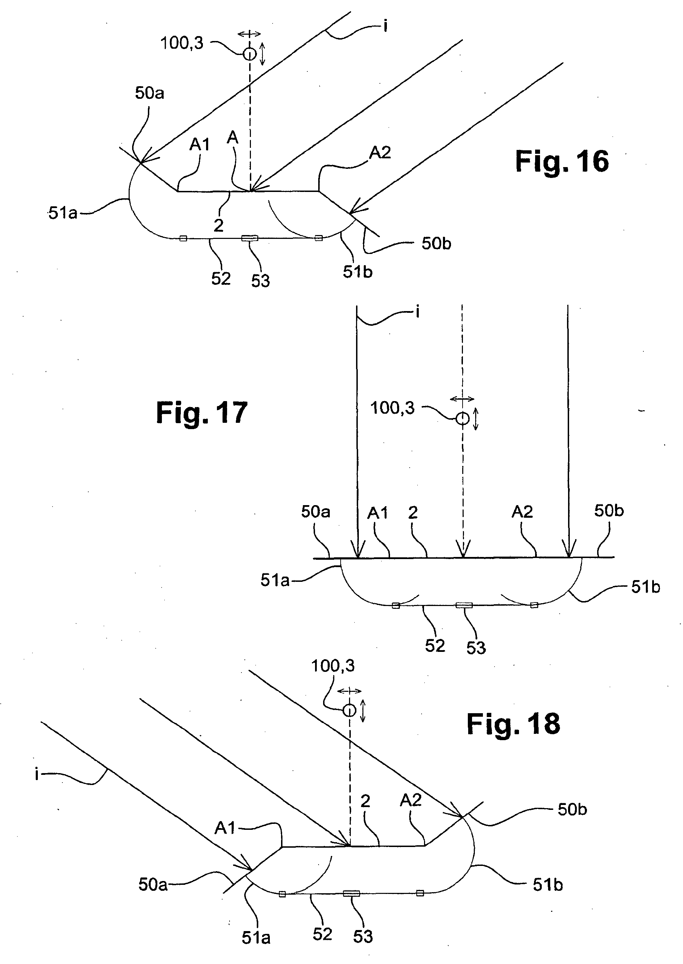

Comme illustré sur les figures 16 à 18, le premier échangeur thermique 50a est disposé transversalement à la tangente en un point d'extrémité d'une première couronne dentée 51 a en forme d'arc de cercle centré sur l'axe A1 et le deuxième échangeur thermique 50a est disposé transversalement à la tangente en un point d'extrémité d'une deuxième couronne dentée 51 b en forme d'arc de cercle centré sur l'axe A2.

Le mouvement de rotation des deux couronnes dentées 51 a, 51 b et par extension des deux échangeurs thermiques 50a, 50b est couplé à l'aide d'une vis sans fin 52 de pas similaire à celui des couronnes crantées 51 a, 51 b.

La vis sans fin 52 est quant à elle entraînée en rotation à l'aide d'un moteur d'entraînement 53.

Le moteur d'entraînement 53, commandé par automate (non illustré), impulse le nombre de tours approprié à la vis sans fin qui oriente de part et d'autre les capteurs thermiques 50a, 50b.

La symétrie des mouvements permet de simplifier le mécanisme de ce dispositif de commande à une seule vis sans fin 52 commandée par un seul moteur d'entraînement 53 et un seul automate.

Selon la dimension de l'ensemble, des dispositifs de commande similaires peuvent être ajoutés.

En outre, avec un tel dispositif de commande, le jeu mécanique est très réduit, les asservissements sont simples et un contrôle de discordance de position est aisé à réaliser.

Selon une variante, ces capteurs thermiques 50a, 50b peuvent être remplacés par des modules photovoltaïques.

A l'inverse, selon une autre variante, ces capteurs thermiques 50a, 50b assurent leur fonction normale d'échangeur thermique mais le tube concentrateur 3 est remplacé par un module photovoltaïque.

Bien sûr, dans un tel cas ces modules photovoltaïques ne sont pas connectés au tube concentrateur 3.

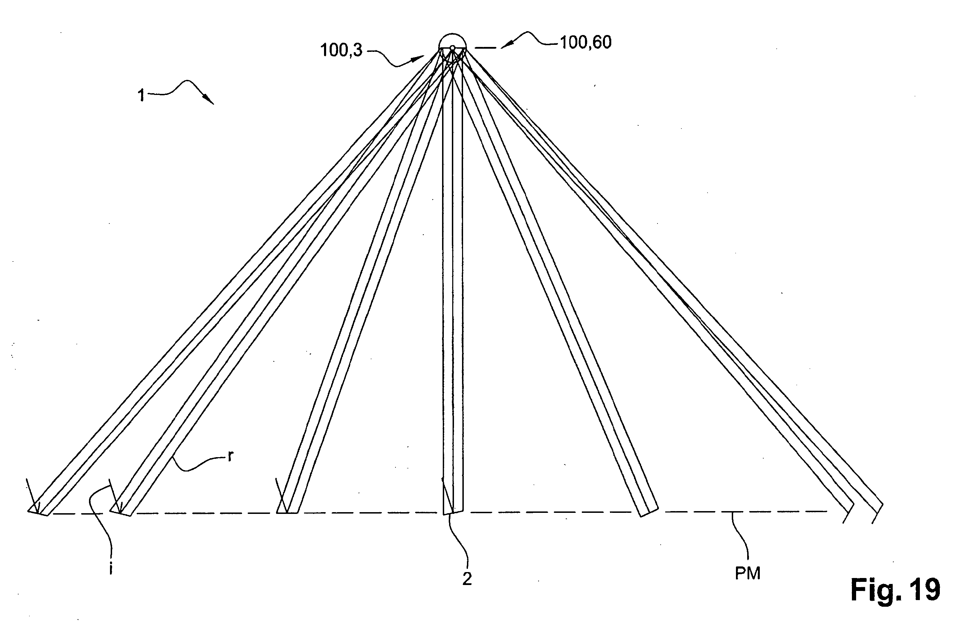

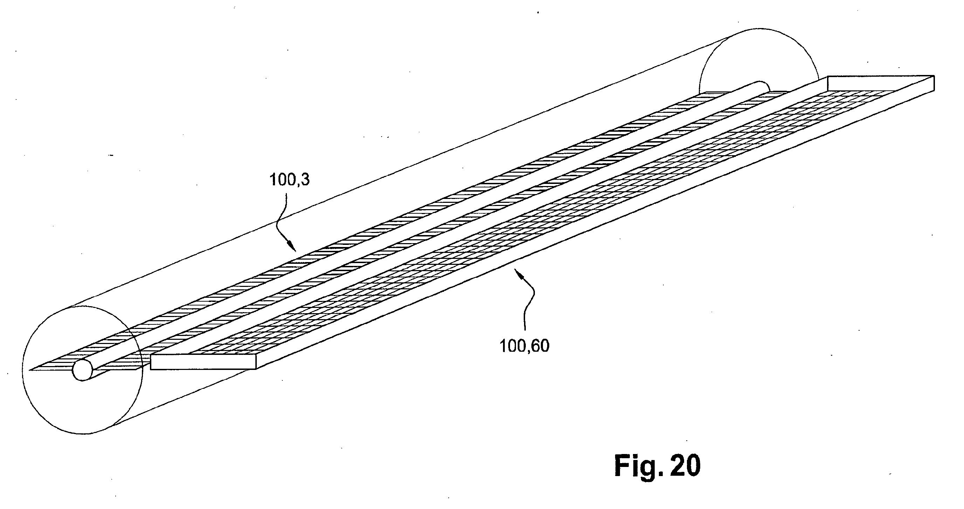

Selon une autre variante compatible avec les différents modes de réalisation présentés précédemment, illutrée aux figures 19 et 20, un capteur solaire 1 comprend d'une part un élément concentrateur 100 constitué par un tube concentrateur 3 mobile disposé de la même manière que dans les précédents modes de réalisation décrits dans lequel il est utilisé et d'autre part un élément concentrateur constitué par un module photovoltaïque 60 mobile, disposé à proximité du tube concentrateur 3 et orienté en direction des mirroirs primaires 2.Ce module photovoltaïque 60 présente une forme longiligne suivant la direction du tube concentrateur 3 et est asservi aux mêmes mouvements que ce dernier.

Ainsi, selon l'exploitation retenue, les miroirs plans 2 pourront s'orienter davantage en direction du tube concentrateur 3 pour chauffer le fluide caloporteur ou davantage en direction du module photovoltaïque 60 pour produire de l'électricité.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

C'est ainsi qu'une centrale solaire 1 selon l'invention peut comprendre deux tubes concentrateurs 3 ou plus interchangeables entre eux ainsi que deux modules photovoltaïques 60 ou plus, rendus mobiles à l'aide de moyens de déplacement 10, 20, 30.

Dans ce mode de réalisation, il est ainsi possible de prévoir des opérations de maintenance sur l'un des tubes concentrateurs 3 mis au repos ainsi que sur un des modules photovoltaïques 60 sans devoir stopper la production de la centrale solaire 1 assurée par l'autre tube concentrateur 3.

C'est également ainsi que la vis sans fin 52 peut être remplacée par une crémaillère mobile en translation dimensionnée pour permettre un déplacement en rotation des couronnes dentées 51a, 51 b de butée à butée.

## Revendications

1. Centrale solaire (1) à miroirs de Fresnel comportant un support pour un ensemble de miroirs constitué par des bandes de miroirs (2) dit miroirs primaires (2), pivotant chacun autour d'un axe de rotation respectif dit grand axe (5) par rapport au support, et destinés à collecter les rayons du soleil afin de les concentrer en direction d'un ou plusieurs éléments concentrateurs (100) de même nature ou de nature différente, **caractérisé en ce que** ladite centrale solaire comporte des moyens de déplacement (10, 20, 30) de l'un ou plusieurs éléments concentrateurs (100) afin de le rendre mobile par rapport au support de l'ensemble des miroirs primaires (2).

2. Centrale solaire (1) à miroirs de Fresnel selon la revendication 1, dans lequel un ou plusieurs éléments concentrateurs (100) est ou sont un tube concentrateur (3) parcouru par un fluide caloporteur.

3. Centrale solaire (1) à miroirs de Fresnel selon l'une des revendications 1 ou 2, dans lequel un ou plusieurs éléments concentrateurs (100) est ou sont un module photovoltaïque (60).

4. Centrale solaire (1) à miroirs de Fresnel selon la revendication 1, dans laquelle les moyens de déplacement (10, 20, 30) comprennent des moyens de déplacements longitudinaux (10) permettant un déplacement du ou des éléments concentrateurs (100) dans un plan horizontal et selon une direction sensiblement longitudinale à la direction des grands axes (5) des miroirs primaires (2).

5. Centrale solaire (1) à miroirs de Fresnel selon l'une des revendications 1 ou 2, dans laquelle les moyens de déplacement (10, 20, 30) comprennent des moyens de déplacements transversaux (20) permettant un déplacement du ou des éléments concentrateurs (100) dans un plan vertical et selon une direction sensiblement transversale à la direction des grands axes (5) des miroirs primaires (2).

6. Centrale solaire (1) à miroirs de Fresnel selon l'une des revendications 1 à 3, dans laquelle les moyens de déplacement (10, 20, 30) comprennent des moyens de déplacements latéraux (30) permettant un déplacement du ou des éléments concentrateurs (100) dans un plan horizontal et selon une direction latérale sensiblement transversale à la direction des grands axes (5) des miroirs primaires (2).

7. Centrale solaire (1) à miroirs de Fresnel selon l'une des revendications 1 à 4, comportant des moyens d'actionnement pour déplacer en
rotation les miroirs primaires (2) autour de leur grand axe (5) en fonction de la hauteur du soleil et dans laquelle le déplacement du ou des éléments concentrateurs (100) engendré par les moyens de déplacement (10, 20, 30) est fonction du mouvement des miroirs primaires (2).

8. Centrale solaire (1) à miroirs de Fresnel selon l'une des revendications 1 à 5, comportant un miroir secondaire (4) destiné à réfléchir en direction du ou des éléments concentrateurs (100) une partie du rayonnement réfléchi par les miroirs primaires (2) qui n'atteint pas directement le ou les éléments concentrateurs (100) et dans laquelle le miroir secondaire (4) suit les mouvements du ou des éléments concentrateurs (100) et est mobile en rotation autour de l'axe principal du ou des éléments concentrateurs (100).

9. Centrale solaire (1) à miroirs de Fresnel selon la revendication 8, dans laquelle le miroir secondaire (4) possède un angle d'ouverture dont la bissectrice (BM) s'oriente en rotation autour du ou des éléments concentrateurs (100) pour coïncider avec la bissectrice (BA) de l'angle formé par l'intersection des deux rayons réfléchis extrêmes renvoyés par l'ensemble des miroirs primaires (2).

10. Centrale solaire (1) à miroirs de Fresnel selon l'une des revendications 1 à 7, comprenant un dispositif de mise au repos du positionnement des miroirs primaires (2) en cas de grand vent.

11. Centrale solaire (1) à miroirs de Fresnel selon l'une des revendications 1 à 8, comprenant un dispositif de mise au repos du positionnement des miroirs primaires (2), autonome et à sécurité positive en cas de manque de courant.

12. Centrale solaire (1) à miroirs de Fresnel selon l'une des revendications 1 à 9, comprenant un dispositif de mise en position de maintenance des miroirs primaires (2) et/ou du ou des éléments concentrateurs.

13. Centrale solaire (1) à miroirs de Fresnel selon l'une des revendications 1 à 10, comprenant un dispositif de fonctionnement manuel permettant à un opérateur d'orienter à sa convenance les miroirs primaires (2) ainsi que de positionner le ou les éléments concentrateurs (100).

14. Centrale solaire (1) à miroirs de Fresnel selon l'une des revendications 1 à 11, comprenant un dispositif de nettoyage automatisé des miroirs primaires (2) seuls ou avec le miroir secondaire (4).

15. Centrale solaire (1) à miroirs de Fresnel selon l'une des revendications 1 à 12 comprenant au moins un capteur thermique agencé pour absorber du rayonnement diffus du soleil.

16. Centrale solaire (1) à miroirs de Fresnel selon la revendication 13 pourvu qu'elle dépende de la revendication 2, dans laquelle le capteur thermique comporte un échangeur thermique mis en communication avec le fluide caloporteur circulant dans le ou les tubes concentrateurs (3).

17. Centrale solaire (1) à miroirs de Fresnel selon la revendication 15 dans laquelle l'au moins un capteur thermique est mobile en rotation autour d'un axe sensiblement de même direction que le grand axe (5) de chacun des miroirs primaires (2).

18. Centre la solaire (1) à miroirs de Fresnel selon l'une des revendications 1 à 17 dans laquelle les miroirs primaires (2) comportent une face arrière comprenant des modules photovoltaïques, le mouvement de pivotement de chacun des miroirs primaires (2) autour de leur grand axe (5) respectif par rapport au support autorisant à une face arrière de prendre la place d'une face avant et inversement.

## Patentansprüche

1. Solaranlage (1) mit Fresnel-Spiegeln, eine Halterung für eine Anordnung von Spiegeln umfassend, die aus Primärspiegel (2) genannten Spiegelreihen (2) gebildet wird, die jeweils um eine jeweilige Drehachse, die große Achse (5) genannt wird, im Verhältnis zur Halterung schwenken, und dazu bestimmt sind, die Sonnenstrahlen einzufangen, um sie in Richtung eines oder mehrerer strahlungsbündelnder Elemente (100) in derselben Art oder in unterschiedlicher Art zu bündeln, **dadurch gekennzeichnet, dass** die besagte Solaranlage Mittel zum Verfahren (10, 20, 30) des einen oder mehrerer strahlungsbündelnder Elemente (100) umfasst, um sie im Verhältnis zur Halterung der Anordnung der Primärspiegel (2) beweglich zu machen.

2. Solaranlage (1) mit Fresnel-Spiegeln nach Anspruch 1, wobei ein oder mehrere strahlungsbündelnde Elemente (100) ein Bündelrohr (3) ist oder sind, das von einem Wärmeträgermedium durchströmt wird.

3. Solaranlage (1) mit Fresnel-Spiegeln nach einem der Ansprüche 1 oder 2, wobei ein oder mehrere strahlungsbündelnde Elemente (100) ein Photovoltaik-Modul ist oder sind.

4. Solaranlage (1) mit Fresnel-Spiegeln nach Anspruch 1, wobei die Mittel zum Verfahren (10, 20, 30) Mittel zum Verfahren in Längsrichtung (10) umfassen, die das Verfahren des oder der strahlungsbündelnden Elemente (100) auf einer horizontalen Ebene und in eine in etwa längs zur Richtung der großen Achsen (5) der Primärspiegel (2) verlaufende Richtung ermöglichen.

5. Solaranlage (1) mit Fresnel-Spiegeln nach einem der Ansprüche 1 oder 2, wobei die Mittel zum Verfahren (10, 20, 30) Mittel zum Verfahren in Querrichtung (20) umfassen, die das Verfahren des oder der strahlungsbündelnden Elemente (100) auf einer vertikalen Ebene und in eine in etwa quer zur Richtung der großen Achsen (5) der Primärspiegel (2) verlaufende Richtung ermöglichen.

6. Solaranlage (1) mit Fresnel-Spiegeln nach einem der Ansprüche 1 oder 3, wobei die Mittel zum Verfahren (10, 20, 30) Mittel zum seitlichen Verfahren (30) umfassen, die das Verfahren des oder der strahlungsbündelnden Elemente (100) auf einer horizontalen Ebene und in eine in etwa quer zur Richtung der großen Achsen (5) der Primärspiegel (2) verlaufende seitliche Richtung ermöglichen.

7. Solaranlage (1) mit Fresnel-Spiegeln nach einem der Ansprüche 1 oder 4, Betätigungsmittel umfassend, um die Primärspiegel (2) in Abhängigkeit von der Höhe der Sonne in Drehung um die große Achse (5) zu versetzen, und wobei das Verfahren des oder der strahlungsbündelnden Elemente (100), das durch die Mittel zum Verfahren (10, 20, 30) generiert wird, von der Bewegung der Primärspiegel (2) abhängt.

8. Solaranlage (1) mit Fresnel-Spiegeln nach einem der Ansprüche 1 oder 5, einen Sekundärspiegel (4) umfassend, der dazu bestimmt ist, einen Teil der von den Primärspiegeln (2) reflektierten Strahlen, die das oder die strahlungsbündelnden Elemente (100) nicht direkt erreichen, in Richtung des oder der strahlungsbündelnden Elemente (100) zu reflektieren, wobei der Sekundärspiegel (4) den Bewegungen des oder der strahlungsbündelnden Elemente (100) folgt und um die Hauptachse des oder der strahlungsbündelnden Elemente (100) gedreht werden kann.

9. Solaranlage (1) mit Fresnel-Spiegeln nach Anspruch 8, wobei der Sekundärspiegel (4) einen Öffnungswinkel besitzt, dessen Winkelhalbierende (BM) sich drehend um das oder die strahlungsbündelnden Elemente (100) orientiert, um mit der Winkelhalbierenden (BA) des Winkels übereinzustimmen, der durch die Schnittlinie der beiden extremen reflektierten Strahlen gebildet wird, die von der Anordnung der Primärspiegel (2) zurückgestrahlt werden.

10. Solaranlage (1) mit Fresnel-Spiegeln nach einem der Ansprüche 1 bis 7, eine Vorrichtung zum Stilllegen der Positionierung der Primärspiegel (2) bei starkem Wind umfassend.

11. Solaranlage (1) mit Fresnel-Spiegeln nach einem der Ansprüche 1 bis 8, eine autonome Vorrichtung zum Stilllegen der Positionierung der Primärspiegel (2) und mit positiver Sicherheit im Falle eines Stromausfalls umfassend.

12. Solaranlage (1) mit Fresnel-Spiegeln nach einem der Ansprüche 1 bis 9, eine Vorrichtung zur Wartungspositionierung der Primärspiegel (2) und/ oder des oder der strahlungsbündelnden Elemente umfassend.

13. Solaranlage (1) mit Fresnel-Spiegeln nach einem der Ansprüche 1 bis 10, eine Vorrichtung für den manuellen Betrieb umfassend, die es einem Bediener ermöglicht, die Primärspiegel (2) nach eigenem Gutdünken auszurichten, und das oder die strahlungsbündelnden Elemente (100) zu positionieren.

14. Solaranlage (1) mit Fresnel-Spiegeln nach einem der Ansprüche 1 bis 11, eine Vorrichtung zur automatischen Reinigung der Primärspiegel (2) alleine, oder mit dem Sekundärspiegel (4) umfassend.

15. Solaranlage (1) mit Fresnel-Spiegeln nach einem der Ansprüche 1 bis 12, zumindest einen Wärmesensor umfassend, der angeordnet ist, um die diffuse Strahlung der Sonne zu absorbieren.

16. Solaranlage (1) mit Fresnel-Spiegeln nach Anspruch 13, unter der Voraussetzung, dass er von Anspruch 2 abhängt, wobei der Wärmesensor einen Wärmetauscher umfasst, der mit dem Wärmeträgermedium in Verbindung gebracht wird, das durch die Bündelrohre (3) strömt.

17. Solaranlage (1) mit Fresnel-Spiegeln nach Anspruch 15, wobei sich der zumindest eine Wärmesensor um eine Achse drehen kann, die sich in etwa in dieselbe Richtung erstreckt, wie die große Achse (5) eines jeden Primärspiegels (2).

18. Solaranlage (1) mit Fresnel-Spiegeln nach einem der Ansprüche 1 bis 17, wobei die Primärspiegel (2) eine Rückseite umfassen, die Photovoltaikmodule enthalten, wobei es die Schwenkbewegung eines jeden Primärspiegels (2) um seine jeweilige große Achse (5) im Verhältnis zur Halterung einer Rückseite ermöglicht, den Platz einer Vorderseite einzunehmen und umgekehrt.

## Claims

1. A solar power plant (1) with Fresnel mirrors including a support for a set of mirrors formed by strips of mirrors (2) called primary mirrors (2), each pivoting around a respective rotational axis called major axis (5) with respect to the support, and intended to collect sunrays in order to concentrate them in the direction of one or several concentrator elements (100) of the same nature or of different nature, **characterized in that** said solar power plant includes means (10, 20, 30) for displacing one or several concentrator elements (100) in order to make it movable with respect to the support of the set of primary mirrors (2).

2. The solar power plant (1) with Fresnel mirrors according to claim 1, wherein one or several concentrator elements (100) is or are a concentrator tube (3) crossed by a heat-carrier fluid.

3. The solar power plant (1) with Fresnel mirrors according to any of claims 1 or 2, wherein one or several concentrator elements (100) is or are a photovoltaic module (60).

4. The solar power plant (1) with Fresnel mirrors according to claim 1, wherein the displacement means (10, 20, 30) comprise longitudinal displacement means (10) allowing a displacement of the concentrator element or elements (100) in a horizontal plane and along a direction which is substantially longitudinal to the direction of the major axes (5) of the primary mirrors (2).

5. The solar power plant (1) with Fresnel mirrors according to any of claims 1 or 2, wherein the displacement means (10, 20, 30) comprise transversal displacement means (20) allowing a displacement of the concentrator element or elements (100) in a vertical plane and along a direction which is substantially transversal to the direction of the major axes (5) of the primary mirrors (2).

6. The solar power plant (1) with Fresnel mirrors according to any of claims 1 to 3, wherein the displacement means (10, 20, 30) comprise lateral displacement means (30) allowing a displacement of the concentrator element or elements (100) in a horizontal plane and along a lateral direction which is substantially transversal to the direction of the major axes (5) of the primary mirrors (2).

7. The solar power plant (1) with Fresnel mirrors according to any of claims 1 to 4, including actuating means for rotationally displacing the primary mirrors (2) around their major axis (5) according to the height of the sun and wherein the displacement of the concentrator element or elements (100) caused by the displacement means (10, 20, 30) is function of the movement of the primary mirrors (2).

8. The solar power plant (1) with Fresnel mirrors according to any of claims 1 to 5, including a secondary mirror (4) intended for reflecting in the direction of the concentrator element or elements (100) part of the rays reflected by the primary mirrors (2) which do not directly reach the concentrator element or elements (100) and wherein the secondary mirror (4) follows the movements of the concentrator element or elements (100) and is movable in rotation around the main axis of the concentrator element or elements(100).

9. The solar power plant (1) with Fresnel mirrors according to claim 8, wherein the secondary mirror (4) has an opening angle of which the bisector (BM) is oriented in rotation around the concentrator element or elements (100) in order to coincide with the bisector (BA) of the angle formed by the intersection of the two extreme reflected rays send by the set of primary mirrors (2).

10. The solar power plant (1) with Fresnel mirrors according to any of claims 1 to 7, comprising a device for putting to rest the positioning of the primary mirrors (2) in the event of high wind.

11. The solar power plant (1) with Fresnel mirrors according to any of claims 1 to 8, comprising a device for putting to rest the positioning of the primary mirrors (2), autonomous and with positive fail-safe control in the event of lack of current.

12. The solar power plant (1) with Fresnel mirrors according to any of claims 1 to 9, comprising a device for putting primary mirrors (2) and/or the concentrator element or elements (100) in maintenance position.

13. The solar power plant (1) with Fresnel mirrors according to any of claims 1 to 10, comprising a manual operating device allowing an operator to orient as he/she sees fit the primary mirrors (2) as well as position the concentrator element or elements (100).

14. The solar power plant (1) with Fresnel mirrors according to any of claims 1 to 11, comprising an automated device for cleaning the primary mirrors (2) alone or with the secondary mirror (4).

15. The solar power plant (1) with Fresnel mirrors according to any of claims 1 to 12 comprising at least a heat sensor arranged for absorbing the diffused rays of the sun.

16. The solar power plant (1) with Fresnel mirrors according to claim 13 provided that it depends on claim 2, wherein the heat sensor includes a heat exchanger in communication with the heat-carrier fluid circulating in the concentrator tube or tubes (3).

17. The solar power plant (1) with Fresnel mirrors according to claim 15 wherein the at least one heat sensor is movable in rotation around an axis substantially of the same direction as the major axis (5) of each of the primary mirrors (2).

18. The solar power plant (1) with Fresnel mirrors according to any of claims 1 to 17 wherein the primary mirrors (2) include a rear face comprising photovoltaic modules, the pivoting movement of each of the primary mirrors (2) around their respective major axis (5) with respect to the support allowing a rear face to take the place of a front face and conversely.
